# EUROPEAN PATENT APPLICATION

(11) **EP 1 250 005 A1**
(43) Date of publication of application: **16.10.2002**
(21) Application number: 01303454.1
(22) Date of filing: 12.04.2001
(51) Int. Cl.: H04N 7/14

(54) **Video communication with feedback of the caller's position relative to the camera**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

A portable or other video communications device has a display 106 and camera 111. It provides a user with feedback as to his position in relation to the camera, with a head location unit 113 serving to modify (at 105) the displayed incoming picture - e.g. by degrading its quality and/or shifting it - if the user's head is off-centre. The location and modification can alternatively be located elsewhere in a remote device or intervening network. A preferred arrangement employs centre-weighted compression.

## Description

The present invention is concerned with video communication devices and systems, and particularly, though not exclusively, to mobile or portable devices. It also extends to telecommunications stations for use with such devices.

According to the present invention there is provided a video communications device as set out in claim 1, below. Other aspects are defined in the other claims.

Some embodiments will now be described, by way of example, with reference to the accompanying drawings.

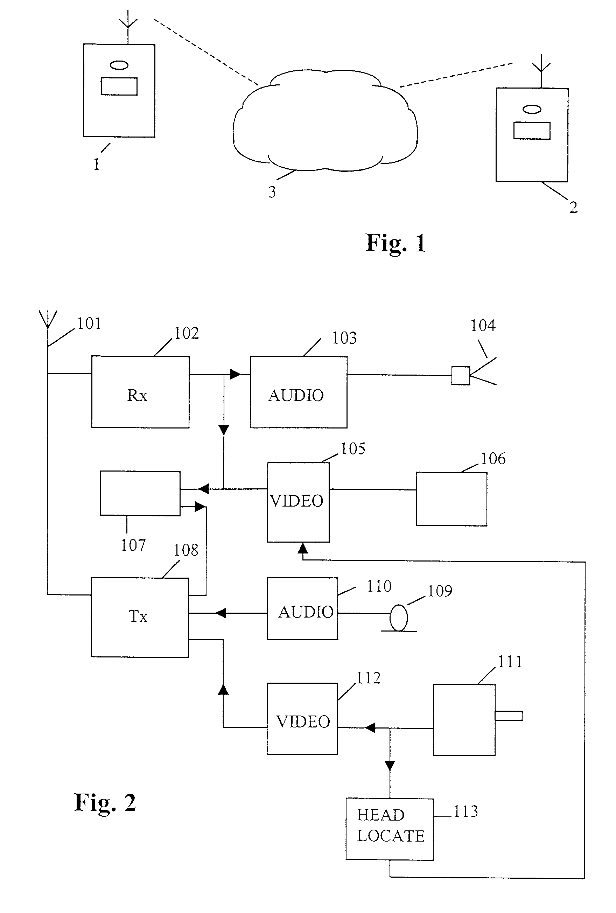

Figure 1 shows a mobile videotelephone system in which a plurality of portable units or handsets 1, 2 are in bidirectional communication via a radio network 3. Two handsets are shown though in practice there would be more.

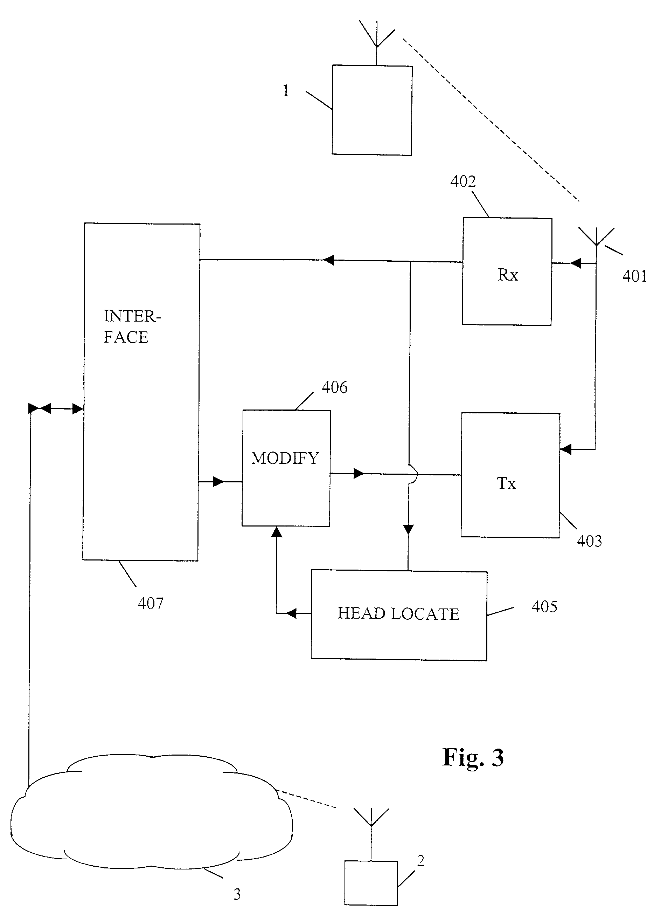

The construction of a handset 1 is shown in more detail in Figure 2 (the other handsets can be of similar construction, or could be conventional). Signals are received from the network on an antenna 101 and conducted to a receiver 102. These signals comprise (a) digitally coded audio signals which are decoded by a decoder 103 and supplied to a loudspeaker 104; (b) digitally coded video signals which are decoded in a decoder 105 and supplied to a display screen 106; (c) control signals which are supplied to a control unit 107. A transmitter 108 is also connected to the antenna 101 and can transmit (a) audio signals generated by a microphone 109 and coded by a digital audio coder 110; (b) digital video signals from a camera 111 and coded by a coder 112; and (c) control signals from the control unit 107.

The handset 1 is, as thus far described, conventional. In particular, it should be noted that the functions of the control unit for call set-up, handover etc. are entirely conventional and will not therefore be described further. This is also the case with the audio signals.

Normally the camera will be set to a fixed direction of view relative to the case in which the device is built, i.e. directed such that when a user of the device is viewing the display screen 106 his head is within the field of view of the camera. However this alone may not be sufficient to ensure that the user's head is entirely within the camera's field of view, and almost certainly will not ensure that the head is in the centre especially if ― as we prefer ― the device is hand-held. Therefore the handset 1 also contains a head location unit 113 which serves to sense the position of the user's head and generate a signal (referred to here as the head position signal) accordingly. This signal, in its most basic form, could simply be an on/off signal indicating that the head is, or is not, within a given margin of error, centrally located within the field of view of the camera; in a more sophisticated arrangement the head position signal might indicate the magnitude and/or direction of the offset of the head from a central position. The signal serves to modify the received picture displayed on the display screen (that is, the picture originating from the other handset 2), thereby giving the user feedback as to head position. We believe that a user can quickly learn to interpret this feedback so as to enable him quickly to adjust the way he is holding the handset. As will be discussed in more detail below, this feedback may take the form of some degradation of the displayed picture, and/or a shift.

The head location unit 113 could take the form of an infra-red sensor, such as is commonly used for burglar alarms and the like, but modified to have a narrow angle of view (substantially smaller than that of the camera itself) so that it produces an output signal only when the user's head is within the central area of the transmitted picture. In the preferred arrangement shown in Figure 2, however, the head location unit actually analyses the video signal coming from the camera 111. Systems for analysing a digitally coded television picture to determine the approximate position within it of a human head are well known. For example, our European patent 225,729 (or US4,841,575) [Welsh, Fenn & Challener] describes an implementation of the method proposed by Nagao (M Nagao - "Picture Recognition and Data Structure", Graphic Languages ― ed. Nake and Rosenfield, 1972). Other head location systems are described in our U.S. patents 5,086,480 [Sexton] and 5,719,951 [Shackleton]. More recent developments to head tracking techniques are described in:
Douglas DeCarlo and Dimitris Metaxas, "The Integration of Optical Flow and
Deformable Models with Applications to Human Face Shape and Motion Estimation", Proceedings CVPR '96, pp. 231-238, 1996.
Jacob Strom, Tony Jebara, Sumit Basu, and Alex Pentland. "Real Time Tracking and Modeling of Faces: An EKF-based Analysis by Synthesis Approach", Proceedings of the Modelling People Workshop at ICCV'99 (August 1999).
Volker Krueger, Alexander Happe and Gerald Sommer, " Affine Real-Time Face Tracking Using a Wavelet Network", Int. Workshop on Recognition, Analysis and Tracking of Faces and Gestures in Real-Time Systems, pp. 141-148, Corfu, Greece, 1999, IEEE Computer Society.
F.J. Huang and T. Chen, "Tracking of Multiple Faces for Human-Computer Interfaces and Virtual Environments", IEEE Intl. Conf. on Multimedia and Expo., New York, July 2000.

Generally such methods will return coordinates defining the position within the picture area of a box bounding the head (from which the position of the centroid can easily be calculated), or of some specific point such as the centroid, eye position, etc. For present purposes the result may be thresholded to determine whether it is within a predetermined distance of the centre, or subtracted from the coordinates of the centre (or other desired position of the feature that has been identified) to produce a measure of the magnitude and direction of the offset that this difference represents.

There are a number of possibilities for modifying the displayed picture to provide feedback. One option would be to degrade the picture quality: in a simple "on-off" system one could reduce the spatial resolution of the displayed picture: this could be achieved by the simple expedient of switching in an analogue low-pass filter, or (in a the digital domain) feeding a signal to the decoder to introduce subsampling or, in a transform-based system, to suppress higher-order coefficients. Other options would be instead (or in addition) to degrade the temporal resolution or amplitude resolution (conturing, quantisation), or to introduce noise or other artifacts (e.g. mosquito noise). If the head location is allowed to assume one of a number of values according to the amount that the head is off-centre, then several corresponding levels of degradation might be provided.

If it is desired to indicate the *direction* of head offset, this could be achieved by shifting the displayed image, though in order to avoid confusion with movements occurring at the other end of the link it may well be preferable to do this in combination with, rather than instead of, the degradation mentioned.

The head position feedback system just described is located in the handset 1, which of course has the advantage of requiring no modification to the network 3, nor indeed to the other handset with which the first is in communication. However, in principle the functionality represented by the head location unit 113 and the video signal modification occurring in the decoder 105 can be located anywhere in the network. For example they could be incorporated in the *other* handset ― where the head location unit would monitor the *incoming* picture and modify the *outgoing* video signal. Or the feedback system may be implemented in the network 3, in which case it would work with a conventional handset. Figure 3 shows it incorporated in a base station 4 where an antenna 401 for communication with the handset is connected to a receiver 402 and transmitter 403. A network interface and control unit 404 (which is conventional) has video connections to the transmitter and receiver (and audio and control connections, not shown). A head location unit 405 monitors the receiver output to produce the head position signal. In principle the unit is identical to the head location unit 112 shown in Figure 2, though depending on the type of video coding used it may be necessary to decode the signal first. The output from the head location unit 405 is supplied to a modification unit 406 interposed in the video connection from the network interface and control unit 404. This unit serves to implement the same degradation and/or image shifting as in the case of Figure 2. Again, it may be necessary to decode (and recode) the signal, at least partially, in order to achieve this. Note that, although convenient, it is not actually necessary that the head location unit 405 and the modification unit 406 be located in the same place, though naturally if they are separated, a link would be required to carry the head location signal from one to the other.

The feedback arrangements described are of use in their own right in improving head centring, for satisfactory transmission of pictures. However, they can also facilitate the use of coding systems which devote more resources to the encoding and transmission of the central areas of the picture than to the outer regions. Although such systems have been proposed in the past for videotelephony, their use is not very practical unless one has reasonable confidence that the user's head will be in the central area where the picture quality is good.

Thus the system of Figure 2 might use such a coding system - often termed "centre-weighted compression". In a digital system one can vary the quality by controlling the number of bits allocated for coding different parts of the picture so that one obtains a higher quality in a part of the picture of particular interest than in the remainder. Commonly, conventional interframe coding schemes (including conditional replenishment, interframe coding with/without motion compensation) use some form of threshold. This may be in the pel domain or transform domain (quantiser steps). Such systems inherently generate data at a varying rate and thus incorporate buffering so that they can interface to a constant bit-rate channel: to prevent overflow or underflow of the buffer they use a feedback mechanism to vary the threshold and/or quantiser step size. Note that these thresholds can do two (related) things:
1. determine which regions will be updated and which will not (as in conditional replenishment)
2. control the quality of the update of those areas which are updated.

Therefore centre weighted compression can be implemented by varying these parameter over the frame area.

A specific example of this is to use a coder operating according to the H.261, MPEG1, MPEG2 or MPEG4 standard, as the syntax of these standards permits the use of a different quantizer stepsize for each macroblock of the picture, which means that one can use a modified coder yet use a standard decoder for reception. Normally, the coder derives a quantiser step size for each macroblock (though it may be transmitted less often, but always once per slice, on the basis that it does not need to be sent if it is going to be the same as for the previous macroblock). The actual value of the step size depends on the buffer control feedback and upon the level of picture activity in the macroblock in question, but does not depend on where the macroblock is in the picture. Thus, to implement centre-weighting, the step size control arrangements are modified to reduce the step size for macroblocks in the middle of the picture (or other region of interest and increase it for the others). If desired, one could have more than two quality levels for a more graceful transition.

If the head location arrangements are such as to permit identification of a head position which is offset from the centre, then this information could, if desired, be fed to the coder to produce a similar offset to the high-definition region of the picture. In fact, such an arrangement could be of value even in systems where the user does not receive feedback as to his head position in the manner described above.

If the handset 2 with which the handset 1 is in communication employs such coding, then we would envisage that the degradation applied by the handset 1 (or by the network on its behalf) would be applied only to the central, higher quality, part of the picture.

Finally, it should be noted that, although these examples envisage a video system in which handheld devices communicate by wireless, the invention can be applied in other situations, for example to fixed devices, or to handheld devices having wired connections (e.g. to a separate intermediate unit which may itself have an onward wired, or wireless, connection.

## Claims

1. A video communication device comprising:
a camera device;
a transmitter for transmitting pictures from the camera device;
a receiver;
a display devices for displaying received pictures;
head location means for generating a head location signal representative of the position, within the field of view of the camera, of the head of a person using the video communication device; and
means operable in response to the head location signal indicating mis-positioning of the head to modify the received picture displayed by the display.

2. A device according to claim 1 in which the head location means comprises means operable to analyse a video signal from the camera.

3. A device according to claim 1 or 2 in which the modification mans comprises means operable to reduce the picture quality of at least part of the picture generated by the display means.

4. A device according to any one of the preceding claims including video coding means connected to receive video signals from the camera and supply coded video signals to the transmitter, the video coding means being arranged to operate in accordance with a coding method which provides a higher picture quality in a central area of the picture than in the remainder.

5. A video communication device comprising:
a camera device;
a transmitter for transmitting pictures from the camera device;
head location means for generating a head location signal representative of the position, within the field of view of the camera, of the head of a person using the video communication device; and
feedback means operable in response to the head location to provide a corresponding indication to the user;
wherein the transmitter includes video coding means arranged to operate in accordance with a coding method which provides a higher quality in one area of the picture than in the remainder.

6. A device according to claim 5 in which the said one area is centrally of the picture.

7. A device according to claim 5 including means for varying the position of the said one area in dependence on the head location signal.

8. A video communication device comprising:
a camera device;
a transmitter for transmitting pictures from the camera device; and
head location means for generating a head location signal representative of the position, within the field of view of the camera, of the head of a person using the video communication device;
wherein the transmitter includes video coding means arranged to operate in accordance with a coding method which provides a higher resolution in one area of the picture than in the remainder, and including means for varying the position of the said one area in dependence on the head location signal.

9. A telecommunications station for bidirectional video communication, including:
head location means (405) connected to monitor video signals travelling in a first direction, and operable to generate a head location signal representative of the position, within the picture represented by that video signal, of the head of a person; and
modification means (406) connected to receive the head location signal and operable, in response to the head location signal indicating mis-positioning of the head, to modify video signals travelling in a second, opposite direction.

10. A telecommunications station for communication with video communication devices, comprising:
a first interface (401, 402, 403) for sending video signals to, and receiving video signals from, a first video communication device (1);
a second interface (404) for sending video signals to, and receiving video signals from, a second video communication device (2);
a first connection whereby video signals received by the first interface from the first video communication device are forwarded to the second interface for sending to the second video communication device (2);
a second connection whereby video signals received by the second interface from the second video communication device are forwarded to the first interface for sending to the first video communication device (1);
head location means (405) connected to receive the video signals received by the first interface device from the first video communication device and operable to generate a head location signal representative of the position, within the picture represented by that video signal, of the head of a person using the first video communication device; and
modification means connected in said second connection and operable, in response to the head location signal indicating mis-positioning of the head, to modify the video signals forwarded from the second interface to the first.

11. A telecommunications station according to claim 9 or 10 in which the modification means comprises means operable to reduce the resolution of at least part of the picture represented by the video signals being modified.

12. A telecommunications network for bidirectional video communication, including:
head location means (405) connected to monitor video signals travelling in a first direction, and operable to generate a head location signal representative of the position, within the picture represented by that video signal, of the head of a person; and
modification means (406) connected to receive the head location signal and operable, in response to the head location signal indicating mis-positioning of the head, to modify video signals travelling in a second, opposite direction.

13. A method of operating a telecommunications system for bidirectional video communication, including:
monitoring video signals travelling in a first direction, to generate a head location signal representative of the position, within the picture represented by that video signal, of the head of a person; and
modifying, in response to the head location signal indicating mis-positioning of the head, video signals travelling in a second, opposite direction.
